# EUROPEAN PATENT SPECIFICATION

(11) **EP 2 168 072 B1**
(45) Date of publication and mention of the grant of the patent: **22.12.2010**
(21) Application number: 08763254.3
(22) Date of filing: 09.06.2008
(51) Int. Cl.: G06F 21/02

(54) **DEVICE AND METHOD FOR PROVIDING AUTHENTICATION**
VORRICHTUNG UND VERFAHREN ZUR BEREITSTELLUNG VON AUTHENTIFIZIERUNGSDATEN
DISPOSITIF ET PROCÉDÉ POUR PROCURER UNE AUTHENTIFICATION

(30) Priority: 14.06.2007 EP 07110251
(43) Date of publication of application: 31.03.2010
(73) Proprietor: Intrinsic ID B.V., 5656 AE Eindhoven (NL)
(72) Inventor: TUYLS, Pim, T., NL-5656 AE Eindhoven (NL); GUAJARDO MERCHAN, Jorge, NL-5656 AE Eindhoven (NL)
(74) Representative: DeltaPatents B.V.
(86) International application number: PCT/IB2008/052258
(87) International publication number: WO 2008/152564

(56) References cited:
- EP-A- 0 313 967
- WO-A-01/52207
- WO-A-2007/031908
- US-A1- 2006 063 286
- US-A1- 2007 130 240
- GHAITH HAMMOURI ET AL: "PUF-HB: A Tamper-Resilient HB Based Authentication Protocol" APPLIED CRYPTOGRAPHY AND NETWORK SECURITY; [LECTURE NOTES IN COMPUTER SCIENCE], SPRINGER BERLIN HEIDELBERG, BERLIN, HEIDELBERG, vol. 5037, 5 June 2007 (2007-06-05), pages 346-365, XP019076281 ISBN: 978-3-540-68913-3
- ARI JUELS ET AL: "Authenticating Pervasive Devices with Human Protocols" ADVANCES IN CRYPTOLOGY - CRYPTO 2005 LECTURE NOTES IN COMPUTER SCIENCE;;LNCS, SPRINGER, BERLIN, DE, vol. 3621, 1 January 2005 (2005-01-01), pages 293-308, XP019016557 ISBN: 978-3-540-28114-6 cited in the application

## Description

### FIELD OF THE INVENTION

The present invention relates to an improved device and method for providing authentication.

### DESCRIPTION OF THE RELATED ART

Product piracy is a worldwide problem. It is estimated that over 5% of all world trade is in counterfeit goods. The product piracy affects both physical products, such as watches, spare parts and medicine, as well as non-physical products, such as music and computer software. However, in some cases, the non-physical products are wrapped in a physical package or stored on some sort of physical media, for example, music on a CD, whereby also non-physical products in some cases may be seen as physical products. In order to overcome this problem a number of different technical solutions for checking the authenticity of a product have been developed. Such a solution is, for example, a bar code system connected to a database, in which individual information for concerned items is held. However, barcodes can easily be copied.

A more promising approach, even though it presently only provides a rather primitive protection, is the use of Radio-frequency identification (RFID) technology. The whole security relies on the premise that an RFID tag is harder to copy than a bar code. Although, this is presently true, it will only be a matter of time until counterfeiters can clone RFID tags. Thus, it is necessary to include technology, for example based on cryptography, to limit the possibility to clone the RFID tag. However, a drawback with traditional public-key crypto systems is that they generally are too expensive to implement in an RFID tag environment as they require too much die area and/or do not provide enough performance.

WO 2007/031908 provides a solution to this problem, where the RFID tag comprises a physical uncloneable function (PUF). A PUF is a function that is realized by a physical system, such that the function is easy to evaluate but the physical system is hard to characterize, and since the physical system is hard to characterize it is also hard to clone. In WO 2007/031908, a coating PUF is used where the randomness in the manufacturing process results in that each individual coating PUF holds its own specific data which is suitable for being used as a cryptographic key.

However, even though the coating PUF provides for a high level of security and limits the possibility to clone the RFID tag, the manufacturing, integration and use of a coating PUF can in many cases be too expensive. Therefore, such a solution is not always suitable in a low cost environment.

### OBJECT OF THE INVENTION

There is therefore a need for an improved device and method for providing authentication, and more specifically that overcome or at least alleviates the manufacturing and integration problems according to prior art.

### SUMMARY OF THE INVENTION

According to an aspect of the invention, the above object is met by an electronic device, comprising a physical uncloneable function (PUF) module, and circuitry adapted to receive a cryptographic query from an electronic unit, read from the PUF module, data generated at a challenge of the PUF module, and generate a cryptographic response based on the data, a random noise component comprised in the data, and the cryptographic query, thereby enabling authentication of the electronic device. A PUF module can be seen as a function, which given an input (challenge) outputs a fuzzy response. For example, at a first invocation with a specific challenge the PUF module responds with the output K', and at a second invocation with the same specific challenge the PUF module outputs K", where K' and K" are similar but not equal, i.e. the output will include a random noise component.

An advantage with the invention is that it will not be necessary to include an additional random generator together with the electronic device, as the fuzzy output provided by the PUF module can be seen as already containing a random noise component. In some cryptographic schemes, as will be further discussed below, the use of a random noise component is necessary to reach a high level of security and to minimize the possibility for a third party to find patterns in cryptographic responses generated during use of the electronic device.

Preferably, the PUF module is a volatile memory module, and the data is generated at power-up of the memory module. A volatile memory module is a digital memory that requires power to maintain stored information. Hence, data read from the memory module after power-up of the memory module (and before any writing to the memory module) will not be the same as data stored on the memory module right before the memory module stops receiving power. Instead, the data generated by the memory module at power-up will depend on the fabrication process. Also, the data is specific for different memory modules fabricated using a similar fabrication process. This is due to manufacturing and material differences inherent in the fabrication process and the material used to fabricate the memory module, respectively. The volatile memory module may be a standard SRAM memory, a plurality of latches, flip-flops, or similar volatile memory elements.

By using the inherent differences between different memory modules fabricated using a similar fabrication process, it is possible to achieve an individual identification of each individual memory module. This individual identification, in the form of individual data, can be used by the circuitry to generate a cryptographic response that is individual for each different electronic device. In turn, the cryptographic response can for example be used in a cryptographic scheme to provide authentication of the electronic device.

Since the fabrication and integration of a volatile memory module with an electronic device is cheaper than the use of a coating PUF, due to the standardized process used when manufacturing a volatile memory module, it is possible to drastically decrease the cost of an electronic device that needs to be authenticated. Furthermore, since only a small amount of volatile memory is needed to achieve a relatively high degree of security, only a small die size is necessary, and hence the size of the complete electronic device can be minimized. Also, to prevent someone from tapping into the communication between the circuitry and the volatile memory module, or to further minimize the size of the complete electronic device, the volatile memory module, or from a more general point of view the PUF module, and the circuitry can be integrated together as one component.

As mentioned above, the fabrication process used when manufacturing a volatile memory module results in that different memory modules in the same fabrication batch will generate different data at power-up. Although this is true, during power-up of a memory module, not all of the data generated by the same memory module will be identical to the data generated at a preceding or following power-up of the same memory module. However, the differences between data generated during two consecutive power-ups of the same memory module can be seen as the random noise component included with the data. The random noise component should be kept at a manageable level, and preferably, more than half of the data generated at power-up of the memory module is identical for two consecutive power-ups of the memory module. However, when getting closer to 50% of identical data for two consecutive power-ups of the memory module, the security of the authentication protocol degrades, that is why the random noise component should be preferably kept somewhat less.

To improve the security, according to an embodiment of the invention, the circuitry is further adapted to receive a cryptographic query from an electronic unit. The electronic unit is preferably communicatively connected to the electronic device, and arranged in the form of a transceiver. When using an electronic device according to the invention, the cryptographic query can in one case be an activation signal for powering-up the electronic device, where the cryptographic query is specific for each individual electronic device. In another case, the cryptographic query is a query for a specific memory address on the memory module, or as already mentioned used together with the data to generate the cryptographic response.

Preferably, the circuitry is further adapted to provide the cryptographic response to the electronic unit. The electronic unit can in this case be used to verify the cryptographic response and thereby authenticate the electronic device. Cryptographic authentication schemes used by the electronic device are further discussed below.

In an embodiment, the electronic device further comprises communication circuitry and an antenna for wirelessly providing the cryptographic response to the electronic unit. An advantage with such an arrangement is that it will not be necessary to arrange the electronic device to directly physically interact with the electronic unit. Such an arrangement is especially useful in relation to a Radio-frequency identification (RFID) tag and for wirelessly verifying the authenticity of an item having such an RFID tag securely attached to it.

Even though the electronic device is especially useful in relation to an RFID tag (anti-counterfeiting), it is understood by the skilled addressee that the electronic device advantageously can be used as component in for example, but not limited to, a USB dongle, a wireless network sensor node, integrated in a SMART card (or SIM card in a mobile phone), or provided as a component in a mobile or a stationary device, such as a PDA, a laptop, or a PC. By means of such integration, it can be possible to authenticate a user having access to the component, or for authenticating a network node.

According to a further aspect of the invention, there is provided a method for authenticating an electronic device comprising a physical uncloneable function (PUF) module, said method comprising the steps of receiving a cryptographic query from an electronic unit, reading, from the PUF module, data generated at a challenge of the PUF module, and generating a cryptographic response based on the data, a random noise component comprised in the data, and the cryptographic query, thereby enabling authentication of the electronic device.

As described above in relation to the electronic device according to the present invention, this novel method provides a plurality of advantages over prior art due to the fact that it is not be necessary to include an additional random generator together with the electronic device, as the fuzzy output provided by the PUF module can be seen as already containing a random component.

The electronic device according to the present invention can for example, but not exclusively, be used in an authentication system further comprising an electronic transceiver adapted to communicate with the electronic device, wherein the electronic transceiver is further adapted to compute a cryptographic query provide the cryptographic query to the electronic device, receive a cryptographic response from the electronic device, compute a cryptographic result based on the cryptographic response, compare the cryptographic result with the cryptographic query, and accept the electronic device as an authentic electronic device if the comparison of the cryptographic result and the cryptographic query is positive. As understood from the use of an electronic device according to the present invention in a system environment together with an electronic transceiver, the anti-counterfeiting problem can be rephrased as an authentication problem, i.e. how to tell that a certain device is really the intended device. This problem is not only present in the RFID realm but also in ad-hoc networks, wireless sensor networks, vehicular networks, etc.

The described steps executed by the electronic transceiver are the basic steps performed in many cryptographic authentication schemes. Two especially advantageous cryptographic authentication schemes that are useful in the above described system environment are the HB and HB+ protocols presented by N. J. Hopper and M. Blum in "Secure Human Identification Protocols", Advances in Cryptology - ASIACRYPT 2001, pp. 52-66, volume 2248 of LNCS, Springer 2001, and by Juels and S. A. Weis in "Authenticating Pervasive Devices with Human Protocols", Advances in Cryptology - CRYPTO 2005, pp. 293-308, volume 3621 of LNCS, Springer 2005, respectively. Further discussing relation to these cryptographic authentication schemes are made in the detailed description of the present invention.

Preferably, the electronic transceiver is further adapted to iterate the steps of computing, providing, receiving, computing, and comparing, a plurality of times before the step of accepting the electronic device as an authentic electronic device. By iteratively performing the above steps before accepting the electronic device as an authentic electronic device it is possible to reach a higher security level. The iteration of the steps can be performed either sequentially or in parallel. In the parallel case, the electronic transceiver can in one round send a plurality of cryptographic queries and the electronic device can respond to this with a plurality of cryptographic responses at the same time. From a general perspective this is not a great difference, however, this can be of great importance from a security perspective. Discussion relating to the parallism in HB and HB+ protocol disclosed by Jonathan Katz and Ji Sun Shin in "Parallel and Concurrent Security of the HB and HB+ Protocols", EUROCRYPT 2006.

### BRIEF DESCRIPTION OF THE DRAWINGS

These and other aspects of the present invention will now be described in more detail, with reference to the appended drawings showing currently preferred embodiments of the invention, in which:
Figure 1 is a block diagram illustrating a system according to an embodiment of the present invention; and
Figures 2a and 2b are flow charts illustrating the fundamental steps of an authentication method according to an embodiment of the present invention.

### DETAILED DESCRIPTION OF CURRENTLY PREFERRED EMBODIMENTS

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

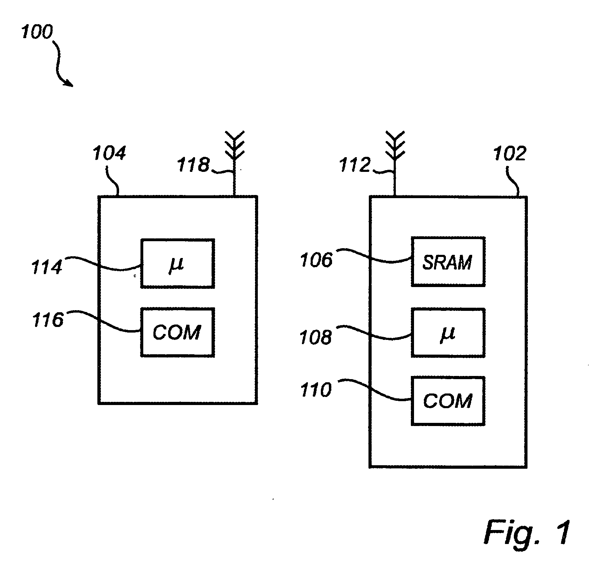

Referring now to the drawings and to figure 1 in particular, there is depicted a block diagram of a system 100 according to an embodiment of the present invention. The system 100 comprises an electronic device, such as an RFID tag 102, and an electronic unit in the form of a transceiver 104 communicatively connected to the RFID tag 102. Even though the electronic device in the current embodiment is in the form of the RFID tag 102, it is understood that this solely represents one of many possibilities of implementing the present invention.

In the present embodiments, the RFID tag 102 is preferably securely attached to an item that needs authentication of its authenticity. Such an item can for example be one of a medical container, a garment, a spare part, or other gods/devices/items that needs means for minimizing the possibility to counterfeit the gods/devices/items. However, as will be obvious from reading the detailed description, the functionality according to the present invention can be implemented in many different types of electronic devices requiring authentication functionality, such as nodes in a network (e.g. mobile phones or similar remotely connected devices), or other types of portable devices allowing for authentication of the portable device or of the holder of the portable device.

The communication between the RFID tag 102 and the transceiver 104 is wireless, and in addition to a volatile memory module 106 and processing circuitry 108 the RFID tag 102 comprises communication circuitry 110 and an antenna 112. Similarly, the transceiver 104 also comprises a controller 114, communication circuitry 116, and an antenna 118. However, it should be noted that the communication between an electronic device according to the present invention and a transceiver from a more general perspective could be provided by means of a wired connection.

In the present embodiment, the RFID tag 102 is a passive tag, having no internal power supply. Instead, the minute electrical current induced in the antenna 112 by an incoming radio frequency signal from the tranceivers 104 will provides enough power for the processing circuitry 108 to perform the tasks according to the present invention. Hence, the antenna 112 should thus be constructed to received the incomming signal from the tranceiver 104, collect power from the incoming signal, and optionally transmitt a response back to the tranceiver 104. As understood by the skilled addressee, the RFID tag 102 can of cource be an active tag comprising an internal power source.

Furthermore, the volatile memory module 106 forming a physically unclonable function (PUF) due to its inherent randomness due to small difference in the material used and the fabrication process and thus providing for a minimized possibility to clone the RFID tag 102, is in the prefered embodiment a standard SRAM memory. However, it would also be possible to use a plurality of latches, flip-flops, or similar volatile memory elements. In an embodiment of the invention, only a small number of bits are necessary for reaching a decent level of security, and therefore only holding approximately 1 Kbits. This makes the integration of the volatile memory module 106 together with the RFID tag 102 simple and cheap.

Even though the memory module 106 and the processing circuitry 108 in figure 1 are illustrated as separate parts, the memory module 106 can be arranged as an integral part of the processing circuitry 108 thus making it more or less impossible to tap into the communication between the memory module 106 and the processing circuitry 108. Also, the integration of the memory module 106 with the processing circuitry 108 can make the total cost of the RFID tag 102 lower, since the manufacturing process of the RFID tag 102 generally does not need to be modified.

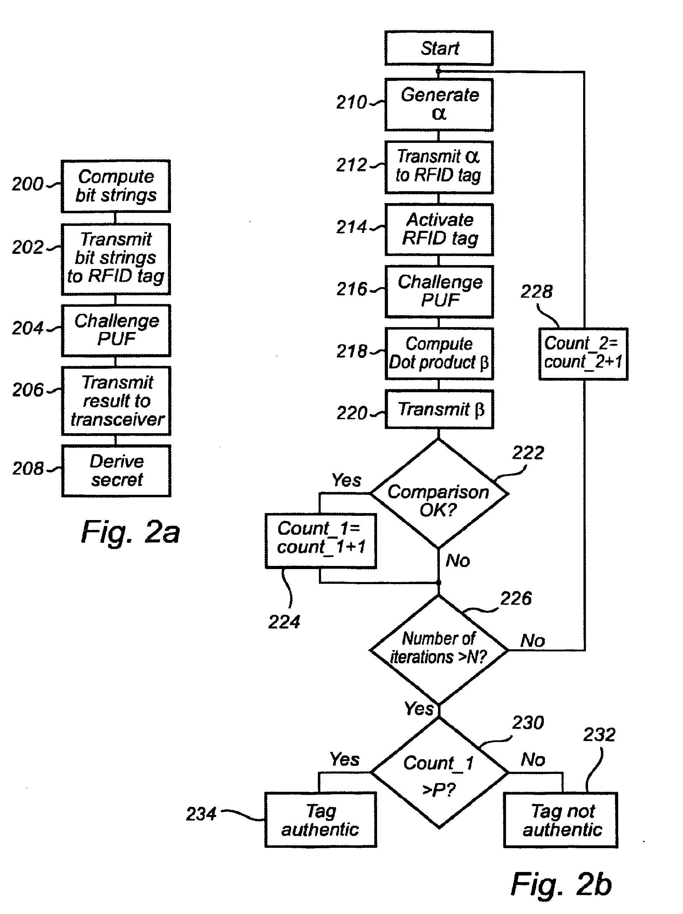

Preferably, secret authentication information is never sent over the insecure communication channel between RFID tag 102 and transceiver 104. Instead, a cryptographic process is used, such as one from the family of challenge-response authentication procedures (e.g. the HB or HB+ authentication protocol). Flow charts illustrating the functionality of the system 100 and the method for authenticating the RFID tag 102 using the tranceiver 104 are illustrated in Figures 2a and 2b. The flow chart in figure 2 illustrates a generalization of the HB protocol, comprising an enrolment phase (figure 2a) and an authentication phase (figure 2b).

In step 200 of the enrolment phase, as is illustrated in figure 2a, the controller 114 computes a plurality of bit strings. The bit strings are in step 202 consecutively transmitted to the RFID tag 102 for challenging, in step 204 the volatile memory module PUF 106 a plurality of times.

In step 206, the result of the challenges are transmitted back to the transceiver 104, where the controller 114 in step 208 will derive helper data for reconstructing the "secret" of the memory module PUF 102, that in the authentication phase will be used for authenticating the RFID tag 102.

As mentioned above, the "secret", denoted δ, of the PUF will according to the present invention comprise a random noise component due to differences in the data generated by the memory module 106 at consecutively power-ups of the memory module 106. The secret, δ, including the random noise component is denoted δ', and the random noise components preferably stands less than 50%, and preferably 15 - 25% of the noisy secret δ'. The helper data is in the enrolment phase used for deriving the secret δ.

In the authentication phase, as is illustrated in figure 2b, the process starts in step 210, where the transceiver 104 used for authenticating the RFID tag 102, which in this step not necessary is the same transceiver as the one in the enrolment phase, generates a k-bit random value α, a cryptographic query. The value α is in step 212 transmitted to the RFID tag 102 by means of the communication circuitry 110, 116 and the antennas 112, 118.

In step 214, the RFID tag 102 receives the cryptographic query as an incoming radio frequency signal from the transceiver 104 and the RFID tag 102 is activated and the volatile memory module 106 is powered-up. Then in step 216, the processing circuitry 108 challenges the volatile memory module PUF and obtains the noisy version of the secret, δ'. The processing circuitry 108 will then, in step 218, computes a dot product of the noisy secret δ' and the value α, resulting in a bit β, a cryptographic response.

In step 220, the bit β is transmitted back to the transceiver 104, again by means of the communication circuitry 110, 116 and the antennas 112, 118 . The bit β is in step 222 compared, using the controller 114, to the dot product of value α and the originally derived secret δ. To reach a decent level of security, the process need to be iterated N number of times, thereby making it harder to characterize the RFID tag using for example Gaussian elimination. The iteration of the steps can be performed either sequentially or in parallel. In the parallel case, the electronic transceiver can in one round send a plurality of cryptographic queries and the electronic device can respond to this with a plurality of cryptographic responses at the same time.

If the result of the comparison in step 222 is positive, a first counter holding the number of positive comparisons is in step 224 incremented. In any case, the process continues in step 226 where a determination is made to if the process has been iterated N number of times. If that is not the case, a second counter, holding the number of iterations, is incremented in step 228, and the process is returned to step 210.

However, if the second counter is larger than N, the first counter holding the number of positive comparisons is in step 230 compared, for example by means of majority voting, to a predetermined value P relating to N, the desired security level, and the amount of random noise present in the data generated by the memory module 106 at power-up. If there is a negative result of the comparison, the RFID tag 102 is determined to be a non-authentic RFID tag. However, if the comparison in step 230 is positive, the RFID tag 102 is in step 234 determined to be an authentic RFID tag, thereby allowing for the authentication of the device/item to which the RFID tag 102 is securely attached.

The enrolment phase and the authentication phase are as mentioned above a generalized version of the HB authentication protocol. However, it is according to the present invention also possible to use the HB+ authentication protocol, or similar or future authentication protocol, which provides for a higher level of security. Presently, the HB+ authentication protocol is claimed to be secure against both passive and active attacks which is not the case with the HB protocol which is only secure against passive attacks.

The skilled addressee realizes that the present invention by no means is limited to the preferred embodiments described above. On the contrary, many modifications and variations are possible within the scope of the appended claims. For example, it is possible to use even more sophisticated Challenge-response authentication schemes, which in turn will depend on the allowable complexity of the electronic device according to the present invention. Furthermore, it should again be noted that the generalized functionality of the electronic device according to the present invention could be used in different situations to provide authentication, either of a device comprising the electronic device or a person having possession of the electronic device (in the form of for example a USB dongle).

In conclusion, it is according to the present invention possible to provide an authentication process suitable for an environment where only a limited amount of computational resources are available. Furthermore, the use of a volatile memory module as a physically unclonable function (PUF) has shown promising, especially as the integration of such a component with general processing circuitry is well known in the art. Advantages with the present invention includes the possibility to provide a high level of security using only a limited amount of hardware, where the electronic device can be manufactured using a standardized manufacturing procedure, and the electronic device according to the present invention is resistant to sophisticated attacks.

## Claims

1. An authentication system (100), comprising:
- an electronic device (102); and
- an electronic transceiver (104) adapted to communicate with the electronic device (102), wherein the electronic device (102) comprises
- a physical uncloneable function (PUF) module; and
- circuitry (108) adapted to:
- receive a cryptographic query (α) from an electronic unit (104);
- read, from the PUF module, data generated at a challenge of the PUF module; and
- generate a cryptographic response (β) based on the data, a random noise component comprised in the data, and the cryptographic query (α),
thereby enabling authentication of the electronic device (102), and
wherein the electronic transceiver (104) is further adapted to:
- compute a cryptographic query (α);
- provide the cryptographic query (α) to the electronic device (102);
- receive a cryptographic response (β) from the electronic device (102);
- compute a cryptographic result based on the cryptographic response (β);
- compare the cryptographic result with the cryptographic query (α); and
- accept the electronic device (102) as an authentic electronic device (102) if the comparison of the cryptographic result and the cryptographic query (α) is positive, and wherein the electronic transceiver (104) is further adapted to iterate the steps of computing, providing, receiving, computing, and comparing, a plurality of times before the step of accepting the electronic device (102) as an authentic electronic device (102).

2. Authentication system (100) according to claim 1, wherein the PUF module is a volatile memory module (106), and wherein the data is generated at power-up of the memory module (106).

3. Authentication system (100) according to claim 2, wherein more than half of the data generated at power-up of the memory module (106) is identical for two consecutive power-ups of the memory module (106).

4. Authentication system (100) according to claim 1, wherin the electronic device (102) further comprising communication circuitry (110) and an antenna (112) for wirelessly providing the cryptographic response (β) to the electronic unit (104).

5. Authentication system (100) according to claim 1, wherein the electronic device (102) is a Radio-frequency identification (RFID) tag.

6. Authentication system (100) according to claim 4 and 5, wherein the Electronic device (102) has no internal power supply and is configured for electrical current induced in the antenna providing power for the circuitry.

7. Authentication system (100) according to claim 1, wherein the electronic device (102) is a network node.

8. Authentication system (100) according to claim 1, wherein the cryptographic query (α) is a query for a specific memory address on the memory module (106).

9. Authentication system (100) according to claim 1, wherein the cryptographic query is an activation signal for powering-up the electronic device, and wherein the cryptographic query is specific for each individual electronic device.

10. Authentication system (100) according to claim 1, wherein generating the cryptographic response comprises computing a dot product of the data, including the random noise component, and the cryptographic query

11. Authentication system (100) according to claim 1 wherein the electronic transceiver (104) is further adapted to incrementing a counter holding the number of positive comparisons if the comparison of the cryptographic result and the cryptographic query (α) is positive, and wherein accepting the electronic device (102) as an authentic electronic device (102) comprises comparing the counter to a predetermined value, the electronic device (102) being accepted as an authentic electronic device (102) if the latter comparison is positive.

12. A method for authenticating an electronic device (102) comprising a physical uncloneable function (PUF) module, said method comprising the steps of:
- compute a cryptographic query (α)
- provide the cryptographic query (α) to the electronic device (102);
- receiving (214) a cryptographic query (α) from an electronic unit (104);
- reading, from the PUF module, data generated at a challenge (216) of the PUF module; and
- generating (218) a cryptographic response (β) based on the data, a random noise component comprised in the data, and the cryptographic query (α),
thereby enabling authentication of the electronic device (102),
- receive a cryptographic response (β) from the electronic device (102);
- compute a cryptographic result based on the cryptographic response (β);
- compare the cryptographic result with the cryptographic query (α); and
- accept the electronic device (102) as an authentic electronic device, and
wherein the method for authenticating an electronic device (102) is further adapted to iterate the steps of computing, providing, receiving, computing, and comparing, a plurality of times before the step of accepting the electronic device (102) as an authentic electronic device (102).

13. Electronic device (102) as in any one of claims 4, 5, 6 or 10.

## Patentansprüche

1. Authentifizierungssystem (100), das Folgendes umfasst:
- ein elektronisches Gerät (102); und
- einen elektronischen Transceiver (104) zum Kommunizieren mit dem elektronischen Gerät (102), wobei das elektronische Gerät (102) Folgendes umfasst:
- ein PUF-(Physical Unclonable Function)-Modul; und
- einen Schaltkomplex (108) mit den folgenden Aufgaben:
- Empfangen einer kryptografischen Anfrage (α) von einer Elektronikeinheit (104);
- Lesen, von dem PUF-Modul, von Daten, die bei einer Abfrage des PUF-Moduls erzeugt wurden; und
- Erzeugen einer kryptografischen Antwort (β) auf der Basis der Daten, einer in den Daten enthaltenen Zufallsrauschkomponente und der kryptografischen Anfrage (α), um dadurch die Authentifizierung des elektronischen Gerätes (102) zu ermöglichen, und
wobei der elektronische Transceiver (104) ferner die folgenden Aufgaben hat:
- Berechnen einer kryptografischen Anfrage (α);
- Übertragen der kryptografischen Anfrage (α) zu dem elektronischen Gerät (102);
- Empfangen einer kryptografischen Antwort (β) von dem elektronischen Gerät (102);
- Berechnen eines kryptografischen Ergebnisses auf der Basis der kryptografischen Antwort (β);
- Vergleichen des kryptografischen Ergebnisses mit der kryptografischen Anfrage (α); und
- Akzeptieren des elektronischen Geräts (102) als authentisches elektronisches Gerät (102), wenn der Vergleich des kryptografischen Ergebnisses und der kryptografischen Anfrage (α) positiv ist, und wobei der elektronische Transceiver (104) ferner die Aufgabe hat, die Schritte des Berechnens, Übertragens, Empfangens, Berechnens und Vergleichens vor dem Schritt des Akzeptierens des elektronischen Geräts (102) als authentisches elektronisches Gerät (102) mehrere Male zu wiederholen.

2. Authentifizierungssystem (100) nach Anspruch 1, wobei das PUF-Modul ein flüchtiges Speichermodul (106) ist und wobei die Daten beim Einschalten des Speichermoduls (106) erzeugt werden.

3. Authentifizierungssystem (100) nach Anspruch 2, wobei mehr als die Hälfte der beim Einschalten des Speichermoduls (106) erzeugten Daten für zwei aufeinander folgende Einschaltungen des Speichermoduls (106) identisch sind.

4. Authentifizierungssystem (100) nach Anspruch 1, wobei das elektronische Gerät (102) ferner einen Kommunikationsschaltkomplex (110) und eine Antenne (112) zum drahtlosen Übertragen der kryptografischen Antwort (β) zu der Elektronikeinheit (104) umfasst.

5. Authentifizierungssystem (100) nach Anspruch 1, wobei das elektronische Gerät (102) ein RFID-(Radiofrequenz-Identifikations)-Etikett ist.

6. Authentifizierungssystem (100) nach Anspruch 4 und 5, wobei das elektronische Gerät (102) keine interne Stromversorgung hat und für einen in der Antenne induzierten elektrischen Strom zum Speisen des Schaltkomplexes konfiguriert ist.

7. Authentifizierungssystem (100) nach Anspruch 1, wobei das elektronische Gerät (102) ein Netzwerkknoten ist.

8. Authentifizierungssystem (100) nach Anspruch 1, wobei die kryptografische Anfrage (α) eine Anfrage für eine spezielle Speicheradresse in dem Speichermodul (106) ist.

9. Authentifizierungssystem (100) nach Anspruch 1, wobei die kryptografische Anfrage ein Aktivierungssignal zum Einschalten des elektronischen Gerätes ist und wobei die kryptografische Anfrage für jedes individuelle elektronische Gerät spezifisch ist.

10. Authentifizierungssystem (100) nach Anspruch 1, wobei das Erzeugen der kryptografischen Antwort das Berechnen eines Punktprodukts der Daten einschließlich der Zufallsrauschkomponente und der kryptografischen Anfrage ist.

11. Authentifizierungssystem (100) nach Anspruch 1, wobei der elektronische Transceiver (104) ferner die Aufgabe hat, einen Zähler für die Anzahl positiver Vergleiche zu inkrementieren, wenn der Vergleich des kryptografischen Ergebnisses und der kryptografischen Anfrage (α) positiv ist, und wobei das Akzeptieren des elektronischen Gerätes (102) als authentisches elektronisches Gerät (102) das Vergleichen des Zählers mit einem vorbestimmten Wert beinhaltet, wobei das elektronische Gerät (102) als authentisches elektronisches Gerät (102) akzeptiert wird, wenn der letztere Vergleich positiv ist.

12. Verfahren zum Authentifizieren eines elektronischen Gerätes mit einem PUF-(Physical Unclonable Function)-Modul, wobei das genannte Verfahren die folgenden Schritte beinhaltet:
- Berechnen einer kryptografischen Anfrage (α);
- Übertragen der kryptografischen Anfrage (α) zu dem elektronischen Gerät (102);
- Empfangen (214) einer kryptografischen Anfrage (α) von einer Elektronikeinheit (104);
- Lesen, von dem PUF-Modul, von bei einer Abfrage (216) des PUF-Moduls erzeugten Daten; und
- Erzeugen (218) einer kryptografischen Antwort (β) auf der Basis der Daten, einer in den Daten enthaltenen Zufallsrauschkomponente und der kryptografischen Anfrage (α), um dadurch eine Authentifizierung des elektronischen Gerätes (102) zu ermöglichen,
- Empfangen einer kryptografischen Antwort (β) von dem elektronischen Gerät (102);
- Berechnen eines kryptografischen Ergebnisses auf der Basis der kryptografischen Antwort (β);
- Vergleichen des kryptografischen Ergebnisses mit der kryptografischen Anfrage (α); und
- Akzeptieren des kryptografischen Gerätes (102) als authentisches elektronisches Gerät, und wobei das Verfahren zum Authentifizieren eines elektronischen Geräts (102) ferner die Aufgabe hat, die Schritte des Berechnens, Übertragens, Empfangens, Berechnens und Vergleichens vor dem Schritt des Akzeptierens des elektronischen Geräts (102) als authentisches elektronisches Gerät (102) mehrere Male zu wiederholen.

13. Elektronisches Gerät (102) nach einem der Ansprüche 4, 5, 6 und 10.

## Revendications

1. Système d'authentification (100), comportant :
- un dispositif électronique (102) ; et
- un appareil émetteur-récepteur électronique (104) adapté pour communiquer avec le dispositif électronique (102), dans lequel le dispositif électronique (102) comporte
- un module de fonction physique ne pouvant subir un clonage (PUF) ; et
- des circuits (108) adaptés pour :
- recevoir une demande cryptographique (α) en provenance d'une unité électronique (104) ;
- lire, en provenance du module PUF, des données générées lors d'une interrogation du module PUF ; et
- générer une réponse cryptographique (β) en fonction des données, d'une composante de bruit aléatoire comprise dans les données, et de la demande cryptographique (α),
pour de ce fait permettre l'authentification du dispositif électronique (102), et
dans lequel l'appareil émetteur-récepteur électronique (104) est par ailleurs adapté pour :
- calculer une demande cryptographique (α) ;
- procurer la demande cryptographique (α) au dispositif électronique (102) ;
- recevoir une réponse cryptographique (β) en provenance du dispositif électronique (102) ;
- calculer un résultat cryptographique en fonction de la réponse cryptographique (β) ;
- comparer le résultat cryptographique à la demande cryptographique (α) ; et
- accepter le dispositif électronique (102) comme étant un dispositif électronique authentique (102) si la comparaison du résultat cryptographique et de la demande cryptographique (α) est positive, et dans lequel l'appareil émetteur-récepteur électronique (104) est par ailleurs adapté pour itérer les étapes consistant à calculer, procurer, recevoir, calculer, et comparer, une pluralité de fois avant l'étape consistant à accepter le dispositif électronique (102) comme étant un dispositif électronique authentique (102).

2. Système d'authentification (100) selon la revendication 1, dans lequel le module PUF est un module de mémoire volatile (106), et dans lequel les données sont générées à la mise sous tension du module de mémoire (106).

3. Système d'authentification (100) selon la revendication 2, dans lequel plus de la moitié des données générées lors de la mise sous tension du module de mémoire (106) sont identiques pour deux mises sous tension consécutives du module de mémoire (106).

4. Système d'authentification (100) selon la revendication 1, dans lequel le dispositif électronique (102) comporte par ailleurs des circuits de communication (110) et une antenne (112) pour procurer par le réseau sans fil la réponse cryptographique (β) à l'unité électronique (104).

5. Système d'authentification (100) selon la revendication 1, dans lequel le dispositif électronique (102) est une étiquette d'identification par radiofréquence (RFID).

6. Système d'authentification (100) selon la revendication 4 et la revendication 5, dans lequel le dispositif électronique (102) ne comporte aucune alimentation électrique interne et est configuré pour un courant électrique induit dans l'antenne en vue de procurer une alimentation aux circuits.

7. Système d'authentification (100) selon la revendication 1, dans lequel le dispositif électronique (102) est un noeud de réseau.

8. Système d'authentification (100) selon la revendication 1, dans lequel la demande cryptographique (α) est une demande d'une adresse mémoire spécifique sur le module de mémoire (106).

9. Système d'authentification (100) selon la revendication 1, dans lequel la demande cryptographique est un signal d'activation de mise sous tension du dispositif électronique, et dans lequel la demande cryptographique est spécifique pour chaque dispositif électronique individuel.

10. Système d'authentification (100) selon la revendication 1, dans lequel la génération de la réponse cryptographique comporte le calcul d'un produit scalaire des données, comprenant la composante de bruit aléatoire, et la demande cryptographique.

11. Système d'authentification (100) selon la revendication 1, dans lequel l'appareil émetteur-récepteur électronique (104) est par ailleurs adapté pour incrémenter un compteur contenant le nombre de comparaisons positives si la comparaison du résultat cryptographique et de la demande cryptographique (α) est positive, et dans lequel l'acceptation du dispositif électronique (102) comme étant un dispositif électronique authentique (102) comporte la comparaison du compteur à une valeur prédéterminée, le dispositif électronique (102) étant accepté comme étant un dispositif électronique authentique (102) si cette dernière comparaison est positive.

12. Procédé d'authentification d'un dispositif électronique (102) comportant un module de fonction physique ne pouvant subir un clonage (PUF), ledit procédé comportant les étapes consistant à :
- calculer une demande cryptographique (α)
- procurer la demande cryptographique (α) au dispositif électronique (102) ;
- recevoir (214) une demande cryptographique (α) en provenance d'une unité électronique (104) ;
- lire, en provenance du module PUF, des données générées lors d'une interrogation (216) du module PUF ; et
- générer (218) une réponse cryptographique (β) en fonction des données, d'une composante de bruit aléatoire comprise dans les données, et de la demande cryptographique (α),
pour de ce fait permettre l'authentification du dispositif électronique (102),
- recevoir une réponse cryptographique (β) en provenance du dispositif électronique (102) ;
- calculer un résultat cryptographique en fonction de la réponse cryptographique (β) ;
- comparer le résultat cryptographique à la demande cryptographique (α) ; et
- accepter le dispositif électronique (102) comme étant un dispositif électronique authentique, et
dans lequel le procédé d'authentification d'un dispositif électronique (102) est par ailleurs adapté pour itérer les étapes consistant à calculer, procurer, recevoir, calculer, et comparer, une pluralité de fois avant l'étape consistant à accepter le dispositif électronique (102) comme étant un dispositif électronique authentique (102).

13. Dispositif électronique (102) selon l'une quelconque des revendications 4, 5, 6 ou 10.
